Europäisches Patentamt

**(19)** European Patent Office

Office européen des brevets

**(11)** **EP 0 601 588 B1**

**(12)** **EUROPEAN PATENT SPECIFICATION**

**(45)** Date of publication and mention
of the grant of the patent:
**11.06.1997 Bulletin 1997/24**

**(51)** Int. Cl.$^6$: **B62D 7/15**

**(21)** Application number: **93119899.8**

**(22)** Date of filing: **09.12.1993**

**(54)** **Four-wheel steering system for vehicle**

Vierradlenkungssystem für ein Fahrzeug

Système à quatre roues directrices pour un véhicule

**(84)** Designated Contracting States:
**DE FR GB**

**(30)** Priority: **10.12.1992 JP 330440/92**
**23.08.1993 JP 207470/93**

**(43)** Date of publication of application:
**15.06.1994 Bulletin 1994/24**

**(73)** Proprietor: **Mazda Motor Corporation**
**Aki-gun Hiroshima-ken (JP)**

**(72)** Inventors:
• **Kumabe, Shigehumi,**
**c/o Mazda Motor Corporation**
**Aki-gun, Hiroshima-ken (JP)**

• **Hosoda, Koji,**
**c/o Mazda Motor Corporation**
**Aki-gun, Hiroshima-ken (JP)**

**(74)** Representative: **Müller-Boré & Partner**
**Patentanwälte**
**Grafinger Strasse 2**
**81671 München (DE)**

**(56)** References cited:
**EP-A- 0 379 143**

• **PATENT ABSTRACTS OF JAPAN vol. 14, no. 237**
**(M-976) (4180) 21 May 1990 & JP-A-02 063 971**
**(SUZUKI MOTOR CO. LTD.) 5 March 1990**

**Description**

BACKGROUND OF THE INVENTION

Field of the Invention

This invention relates to a four-wheel steering system for a vehicle, and more particularly to a four-wheel steering system in which a target value for controlling turning of the rear wheels in response to turning of the front wheels is determined taking into account a value representing a running state of the vehicle other than the vehicle speed such as the turning angle of the front wheels, the yaw rate or the like. (Such a value will be referred to as "a running state value", hereinbelow.)

Description of the Prior Art

In such a four-wheel steering system, the rear wheels are generally turned in the direction opposite to the front wheel turning direction (the reverse phase) in a low vehicle speed range in order to improve heading of the vehicle and in the same direction as the front wheel turning direction (the same phase) in a high vehicle speed range in order to improve the running stability.

Further there has been known a four-wheel steering system in which a target value for controlling turning of the rear wheels in response to turning of the front wheels (e.g., a target rear wheel turning angle or the ratio of the rear wheel turning angle to the front wheel turning angle) is determined by addition and subtraction of a base term which is determined according to the vehicle speed and a plurality of correction terms which are determined on the basis of running state values other than the vehicle speed such as the front wheel turning angle, the front wheel turning speed, and the yaw rate, thereby improving the heading and directional stability of the vehicle during turning in harmony with each other. (See, for instance, Japanese Unexamined Patent Publication No. 4(1992)-108079.) Each of the correction terms is a product of a function of the corresponding running state value and a control gain, and the control gain is determined according to the vehicle speed. For example, the control gain is set to be 0 in a low vehicle speed range and to be a positive constant in a high vehicle speed range.

However the conventional four-wheel steering system involves the following problem. That is, when the vehicle is sharply decelerated during turning, the base term changes to the reverse phase side and the yaw rate correction term changes to 0 and accordingly, the rear wheel turning angle changes from the same phase to the reverse phase, which causes an oversteering state and deteriorates the running stability.

This problem may be overcome by fixing the target value for controlling turning of the rear wheels when the vehicle is sharply decelerated during turning.

The EP-A-0 379 143 discloses a rear wheel steering device for a vehicle comprising a steering control mechanism which steers the rear wheels of the vehicles in dependency of the steering angle of the front wheels, the vehicle speed, the yaw rate and based on properties of the vehicle. Under specifically detected conditions, the target value for controlling the turning of the rear wheel can be fixed.

However this approach is disadvantageous in that since the running state values are all ignored when the target value is fixed, fine rear wheel turning control cannot be realized. For example, when the yaw rate increases due to further turning of the steering wheel in the same direction upon a sharp deceleration during turning or due to occurrence of spin upon a sharp deceleration during turning, the rear wheel turning control is carried out on the basis of a target value which is on the reverse phase side of the target value which is determined taking into account the yaw rate, and accordingly, behavior of the vehicle cannot be sufficiently controlled. Further when the steering wheel is turned in the reverse direction upon a sharp deceleration during turning, the rear wheel turning control is carried out on the basis of a target value which is on the same phase side of the target value which is determined taking into account the front wheel turning angle and the front wheel turning speed, and accordingly, the vehicle cannot be turned sufficiently quickly.

SUMMARY OF THE INVENTION

In view of the foregoing observations and description, the primary object of the present invention is to provide a four-wheel steering system for a vehicle in which fine rear wheel turning control can be realized with the stability and the heading performance of the vehicle harmonized with each other.

The four-wheel steering system in accordance with the present invention comprises a target value determining means which determines a target value for controlling turning of the rear wheels in response to turning of the front wheels by adding and subtracting a plurality of correction terms which are determined on the basis of running state values other than the vehicle speed to and from a base term which is determined according to the vehicle speed, the base term being set according to the vehicle speed so that the rear wheels are turned in the reverse phase in a low vehicle speed range and in the same phase in a high vehicle speed range, and each of said correction terms being a product of a function of the corresponding running state value and a control gain determined according to the vehicle speed, and characterized by having a determining means which determines that the vehicle is making a sharp deceleration and a correction means which causes the target value determining means to fix the base term and the control gains of at least one of the correction terms to respective predetermined values and to determine the target value on the basis of the base term and the correction terms thus obtained when the determining means determines that the vehicle is making a sharp deceleration.

In one embodiment of the present invention, said correction terms which are determined on the basis of running state values other than the vehicle speed includes a yaw-rate-based correction term, a front-wheel-turning-angle-based correction term and a front-wheel-turning-speed-based correction term respectively having the yaw rate, the front wheel turning angle and the front wheel turning speed as the running state values, the control gain of the yaw-rate-based correction term is set to be 0 in a low vehicle speed range, to be a positive constant value in a middle vehicle speed range and to be a positive constant value in a high vehicle speed range, the control gain of the front-wheel-turning-angle-based correction term is set to be a positive constant value in the low vehicle speed range, to be 0 in the middle vehicle speed range and to be a positive constant value in the high vehicle speed range, and the control gain of the front-wheel-turning-speed-based correction term is set to be a positive constant value in the low vehicle speed range, to be 0 in the middle vehicle speed range and to be a positive constant value in the high vehicle speed range.

The base term and the control gains may be fixed to the values at the time of determination that the vehicle is making a sharp deceleration during turning, or may be fixed to values somewhat smaller or larger than those at the time of determination that the vehicle is making a sharp deceleration.

The "target value for controlling turning of the rear wheels" may be a target rear wheel turning angle, a target rear wheel turning angle ratio (the ratio of the rear wheel turning angle to the front wheel turning angle), or the like so long as it is used for controlling turning of the rear wheels.

In the four-wheel steering system of the present invention, when the vehicle makes a sharp deceleration, the values which changes with the vehicle speed are fixed and the values which depend upon the running state values other than the vehicle speed are not fixed. Accordingly, even if the vehicle speed as detected by the vehicle speed sensor lowers, the target value for controlling turning of the rear wheels cannot be sharply changed from the same phase to the reverse phase, whereby occurrence of an oversteering state can be prevented, and at the same time, since the target value can change with change in the other running state values, the heading performance can be ensured.

BRIEF DESCRIPTION OF THE DRAWINGS

Figure 1 is a schematic view showing a four-wheel steering system in accordance with an embodiment of the present invention,

Figure 2 is a block diagram for illustrating the target value determining means provided in the control unit,

Figure 3 is a flow chart for illustrating the operation of the control unit in correcting the target rear wheel turning angle ratio,

Figure 4 shows a modification of the flow chart shown in Figure 3 for correcting the target rear wheel turning angle ratio, and

Figure 5 shows another modification of the flow chart shown in Figure 3 for correcting the target rear wheel turning angle ratio.

DESCRIPTION OF THE PREFERRED EMBODIMENT

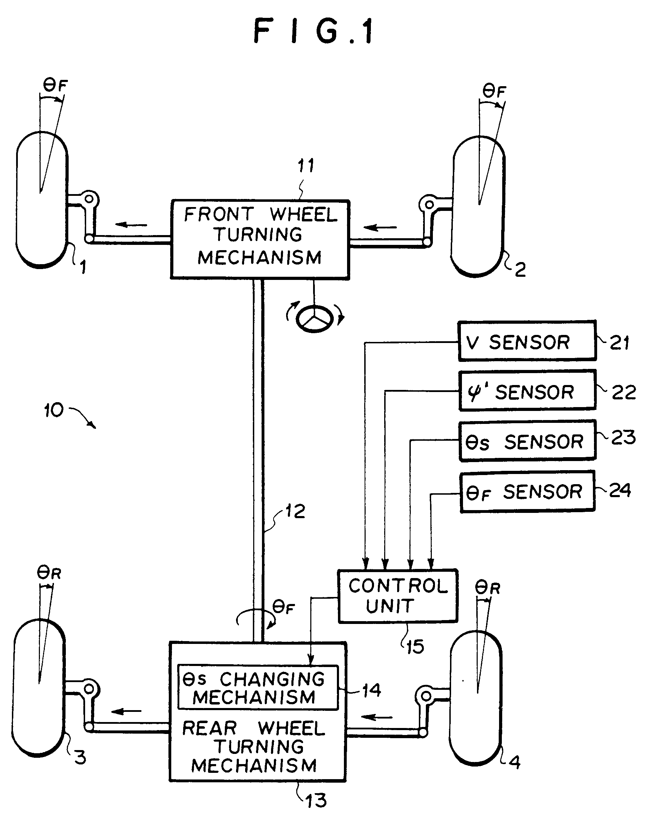

In Figure 1, a four-wheel steering system in accordance with an embodiment of the present invention comprises a front wheel turning mechanism 11 which turns front wheels 1 and 2 of a vehicle, a rear wheel turning mechanism 13 which is mechanically connected to the front wheel turning mechanism 11 by way of a relay shaft 12 and turns rear wheels 3 and 4 in response to turning the front wheels 1 and 2 to a target rear wheel turning angle $\theta_R$ determined according to a given front wheel turning angle $\theta_F$ input from the front wheel turning mechanism 11, and a control unit 15 which controls the rear wheel turning mechanism 13 by way of a rear wheel turning angle ratio changing mechanism 14 built in the rear wheel turning mechanism 13. The rear wheel turning angle ratio changing mechanism 14 sets and changes the rear wheel turning angle ratio $\theta_S$ which is the ratio of the rear wheel turning angle $\theta_R$ to the front wheel turning angle $\theta_F$.

Signals representing the vehicle speed V, the yaw rate $\psi'$, the rear wheel turning angle ratio $\theta_S$ and the front wheel turning angle $\theta_F$ are input into the control unit 15 from a vehicle speed sensor 21, a yaw rate sensor 22, a rear wheel turning angle ratio sensor 23 and a front wheel turning angle sensor 24. The rear wheel turning angle ratio sensor 23 detects the rear wheel turning angle ratio $\theta_S$ set by the rear wheel turning angle ratio changing mechanism 14 and the front wheel turning angle sensor 24 detects the front wheel turning angle $\theta_F$ for instance, through the rotational angle of the steering shaft of the front wheel turning mechanism 11.

The control unit 15 calculates the target rear wheel turning angle ratio $TG\theta_S$ according to the following formula (1).

EP 0 601 588 B1

$$TG\theta_S = -G_1 \cdot f_1(V) \cdot \theta_{S \cdot St} + G_2 \cdot K_2(\theta_{F2}) \cdot J_2(|\theta'_{F2}|) \cdot f_2(V) \cdot \theta_{S \cdot YAW} -G_3 \cdot K_3(\theta_{F2}) \cdot f_3(V) \cdot \theta_{S \cdot StD} \qquad (1)$$
$$+ G_4 \cdot f_4(V)$$

The control unit 15 determines the operands, i.e., the terms of the right side of the above formula, on the basis of the vehicle speed V, the yaw rate $\psi'$, the front wheel turning angle $\theta_F$ and the rate of change $\theta'_{F2}$ of the front wheel turning angle $\theta_F$ which is obtained by differentiating the front wheel turning angle $\theta_F$ When the value of the target rear wheel turning angle ratio $TG\theta_S$ obtained according to the formula (1) is outside a predetermined acceptable range set according to the vehicle speed V, the control unit 15 corrects it to a value within the range. Then the control unit 15 calculates the target rear wheel turning angle $\theta_R$ according to the following formula (2).

$$TG\theta_R = \theta_F \cdot TG\theta_{S1} \qquad (2)$$

wherein $TG\theta_{S1}$ represents the target rear wheel turning angle ratio $TG\theta_S$ as it is calculated on the basis of the aforesaid operands or corrected as required.

The first term of the right side of the formula (1) is a front-wheel-turning-angle-based correction term wherein $\theta_{S \cdot St}$ is a correction value based on the front wheel turning angle $\theta_F$ The second term is a yaw-rate-based correction term wherein $\theta_{S \cdot YAW}$ is a correction value based on the yaw rate $\psi'$. The third term is a front-wheel-turning-speed-based correction term wherein $\theta_{S \cdot StD}$ is a correction value based on the rate of change $\theta'_{F2}$. The fourth term is a base term based on which the rear wheel turning is controlled according to the vehicle speed V. By setting the target rear wheel turning angle ratio $TG\theta_S$ as represented by the formula (1), a phase switching control where when the front wheels are turned while the vehicle is running straight, the rear wheels are turned in the direction opposite to the front wheels at the beginning of the turning, thereby improving the heading performance, and then the rear wheels are turned in the same direction as the front wheels as the yaw rate is generated, thereby improving the directional stability, can be performed while the control of the rear wheel turning is basically effected according to the vehicle speed.

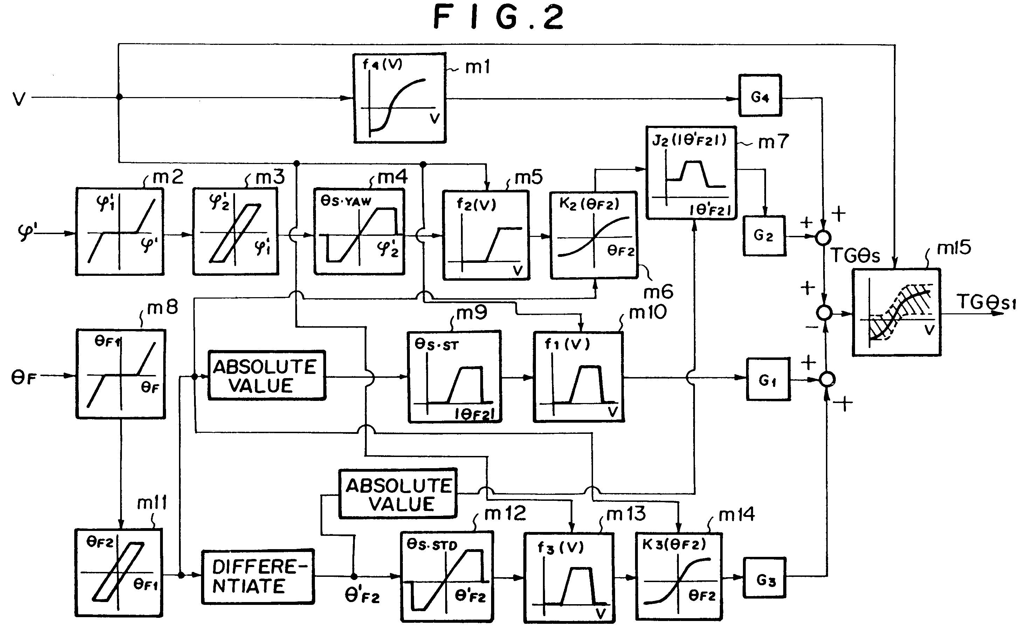

$G_1$, $G_2$, $G_3$ and $G_4$ in the formula (1) are constants, and the variables in the formula (1) are calculated in the following manner on the basis of the vehicle speed V, the yaw rate $\psi'$ and the front wheel turning angle $\theta_F$ as shown in Figure 2.

Variables $f_1(V)$, $f_2(V)$, $f_3(V)$ and $f_4(V)$ are vehicle speed sensitive control gains and are respectively calculated according to maps m10, m5, m13 and m1 (Figure 2) on the basis of the vehicle speed V. According to the maps m10 and m13, the variables $f_1(V)$ and $f_3(V)$ are 0 in the low and high vehicle speed ranges and are positive constant values in the middle vehicle speed range. According to the map m5, the variable $f_2(V)$ is 0 in the low vehicle speed range and is a positive constant value in the middle and high vehicle speed ranges. According to the map m1, the variable $f_4(V)$ is of a negative value having a large absolute value in the low vehicle speed range, is increased from a negative value to a positive value as the vehicle speed increases in the middle vehicle speed range and is of a large positive value in the high vehicle speed range.

The correction value $\theta_{S \cdot St}$ of the first term is derived from the front wheel turning angle $\theta_F$ in the following manner. That is, the front wheel turning angle $\theta_F$ is converted into $\theta_{F1}$ according to map m8 which has an offset and then $\theta_{F1}$ is converted into $\theta_{F2}$ according to map m11 which has hysteresis. Then the correction value $\theta_{S \cdot St}$ is calculated according to map m9 on the basis of the absolute value of $\theta_{F2}$ ($|\theta_{F2}|$). The offset of map m8 is for preventing unnecessary control by providing a dead zone near the neutral position of the steering wheel. The hysteresis of map m11 is for preventing hunting of control. According to map m9, the correction value $\theta_{S \cdot St}$ is 0 in the small front wheel turning angle range, is increased with increase of the front wheel turning angle in the middle front wheel turning angle range and is of a positive constant value in the large front wheel turning angle range. When the front wheel turning angle $\theta_F$ exceeds a predetermined value, the correction value $\theta_{S \cdot St}$ is nullified taking that it is an abnormal value.

The correction value $\theta_{S \cdot YAW}$ of the second term is derived from the yaw rate $\psi'$ in the following manner. That is, the yaw rate $\psi'$ is converted into $\psi'_1$ according to map m2 which has an offset and then $\psi'_1$ is converted into $\psi'_2$ according to map m3 which has hysteresis. Then the correction value $\theta_{S \cdot YAW}$ is calculated according to map m4 on the basis of $\psi'_2$. The offset of map m2 and the hysteresis of map m3 are for the same reason as for the correction value $\theta_{S \cdot St}$. According to map m4, the correction value $\theta_{S \cdot YAW}$ is proportional to $\psi'_2$ in the small yaw rate range and is of a constant value in the middle yaw rate range. When the yaw rate $\psi'$ exceeds a predetermined value, the correction value $\theta_{S \cdot YAW}$ is nullified taking that it is an abnormal value.

Variable $K_2(\theta_{F2})$ of the second term is a front wheel turning angle sensitive control gain and is calculated according to map m6 on the basis of $\theta_{F2}$ obtained from map m11. According to map m6, the variable $K_2(\theta_{F2})$ is of a value substantially proportional to $\theta_{F2}$ in the small front wheel turning angle range and the rate of increase of the value of the variable $K_2(\theta_{F2})$ is reduced as the front wheel turning angle increases.

Variable $J_2(|\theta'_{F2}|)$ of the second term is a control gain sensitive to the front wheel turning speed and is calculated according to map m7 on the basis of the absolute value $|\theta'_{F2}|$ of the differentiated value of $\theta_{F2}$ obtained from map m11. According to map m7, the variable $J_2(|\theta'_{F2}|)$ is of a small value in the range where $|\theta'_{F2}|$, or the front wheel turning speed is low, is of a large value in the range where the front wheel turning angle speed is middle and is of the smallest value

4

in the range where the front wheel turning speed is high.

Variable $\theta_{S \cdot StD}$ is a correction value sensitive to the front wheel turning speed and is calculated according to map m12 on the basis of the differentiated value $\theta'_{F2}$ of $\theta_{F2}$ obtained from map m11. According to map m12, the variable $\theta_{S \cdot StD}$ is of a value proportional to $\theta'_{F2}$ in the range where the front wheel turning speed is low, is of a positive constant value in the range where the front wheel turning speed is middle and is 0 in the range where the front wheel turning speed is high taking that it is an abnormal value.

Variable $K_3(\theta_{F2})$ of the third term is a front wheel turning angle sensitive control gain and is calculated according to map m14 on the basis of $\theta_{F2}$ obtained from map m11. According to map m14, the variable $K_3(\theta_{F2})$ is of a value substantially proportional to $\theta_{F2}$ in the small front wheel turning angle range and the rate of increase of the value of the variable $K_3(\theta_{F2})$ is reduced as the front wheel turning angle increases.

Since the target rear wheel turning angle ratio $TG\theta_S$ is determined by addition and subtraction of the operands obtained by multiplying the constants and the variables for each term of the formula (1), the target rear wheel turning angle ratio $TG\theta_S$ is of an abnormal value when the result of addition and subtraction is of an abnormal value. Accordingly, when the target rear wheel turning angle ratio $TG\theta_S$ thus obtained is outside an acceptable range which is set according to the vehicle speed V (represented by hatched portion in map m15), the target rear wheel turning angle ratio $TG\theta_S$ is corrected to the upper or lower limit of the acceptable range (represented by the broken lines in map m15). The solid line in map m15 shows the variable $f_4(V)$ shown in map m1.

The structure shown in Figure 2 forms a target value determining means 31 and the target value determining means 31 is provided in the control unit 15.

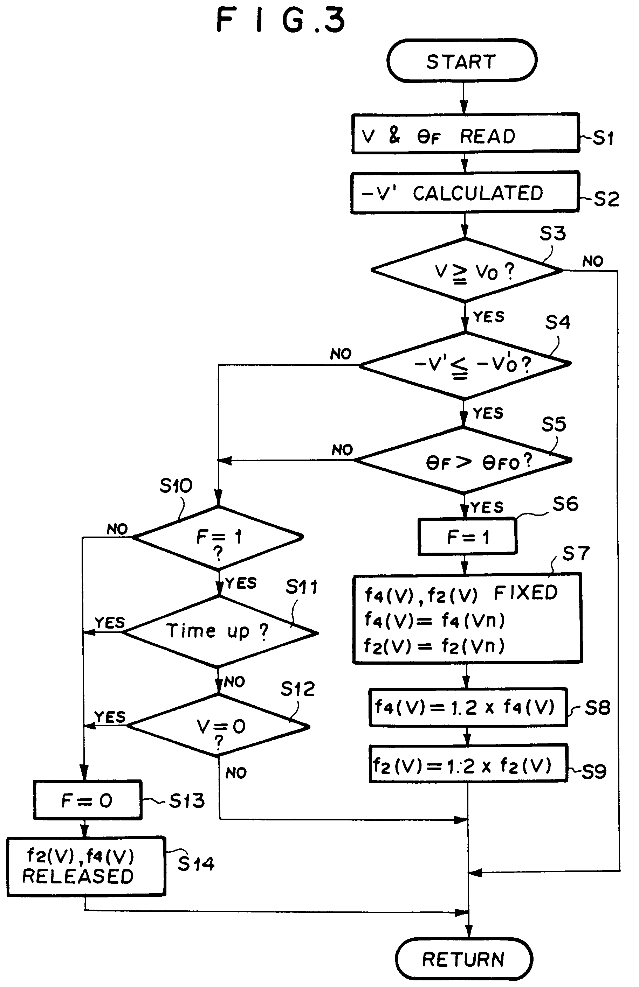

In this embodiment, the target rear wheel turning angle ratio $TG\theta_S$ determined in the manner described above is corrected according to the flow chart shown in Figure 3 when the vehicle is making a sharp deceleration during turning.

The vehicle speed V detected by the vehicle speed sensor 21 and the front wheel turning angle $\theta_F$ detected by the front wheel turning angle sensor 24 are first read (step S1) and then the deceleration of the vehicle -V' is calculated (step S2). The deceleration of the vehicle -V' is obtained by dividing the difference between the preceding value and the present value of the vehicle speed V by the cycle time.

Then in step S3, it is determined whether the vehicle speed V is not lower than a predetermined value Vo, and in step S4, it is determined whether the deceleration of the vehicle -V' is not smaller than a predetermined value -V'o (-V'≤-V'o), and in step S5, it is determined whether the front wheel turning angle $\theta_F$ is larger than a predetermined value $\theta_{Fo}$. When it is determined that the vehicle speed V is not lower than the predetermined value Vo, the deceleration of the vehicle -V' is not smaller than the predetermined value -V'o (-V'≤-V'o) and the front wheel turning angle $\theta_F$ is larger than the predetermined value $\theta_{Fo}$, flag F is set to 1 in step S6. Then in step S7, the vehicle speed sensitive control gains f4(V) and f2(V) of the fourth term (the base term) and the second term (the yaw-rate-based correction term) of the formula (1) are fixed respectively to the values at that time f4(Vn) and f2(Vn). The fixed control gains f4(V) and f2(V) are then replaced with the values obtained by multiplying them by 1.2. (steps S8 and S9) Then the flow returns.

When it is determined in step S3 that the vehicle speed V is lower than the predetermined value Vo, the flow directly returns. When it is determined that the deceleration of the vehicle -V' is smaller than the predetermined value -V'o (-V'≤-V'o) in step S4 or that the front wheel turning angle $\theta_F$ is not larger than the predetermined value $\theta_{Fo}$ in step S5, it is determined in step S10 whether the flag F is 1. When it is determined that the flag F is 1, it is then determined in step S11 whether time is up and it is determined in step S12 whether the vehicle speed is 0. When it is determined in step S11 that time is not up and at the same time it is determined in step S12 that the vehicle speed is not 0, the flow immediately returns.

When it is determined in step S10 that the flag F is not 1, when it is determined in step S11 that time is up or when it is determined in step S12 that the vehicle speed is 0, the flag F is reset to 0 in step S13 and the fixed control gains f4(V) and f2(V) are released in step S14.

That is, when it is determined that the vehicle is making a sharp deceleration during turning in steps S1 to S5, the target rear wheel turning angle ratio $TG\theta_S$ is corrected on the basis of the fixed control gains f4(V) and f2(V) in steps S6 to S14. Since the base term is the product of the control gain f4(V) and a constant, the base term is fixed when the control gain f4(V) is fixed.

In the normal turning, the control unit 15 determines the target rear wheel turning angle ratio $TG\theta_S$ on the basis of the formula (1) and corrects the target rear wheel turning angle ratio $TG\theta_S$ to be in the acceptable range if necessary. Then the control unit 15 controls the rear wheel turning angle ratio changing mechanism 14 to set the actual rear wheel turning angle ratio $\theta_S$ to the target rear wheel turning angle ratio $TG\theta_S1$ thus obtained. Then the rear wheel turning mechanism 13 turns the rear wheels to an angle $\theta R$ which is the product of the target rear wheel turning angle ratio $TG\theta_S1$ and the front wheel turning angle $\theta F$ under feedback control by the control unit 15. Since according to the formula (1), the target rear wheel turning angle ratio $TG\theta_S$ is determined by adding and subtracting the correction terms determined on the basis of the running state values other than the vehicle speed, i.e., the front wheel turning angle, the front wheel turning speed and the yaw rate, to and from the base term which is changed according to the vehicle speed, both the heading performance and the stability during turning can be improved.

When the vehicle makes a sharp deceleration during turning, the base term (more strictly the control gain f4(V) thereof) and the control gain f2(V) of the yaw-rate-based correction term are fixed in the formula (1). Accordingly, even if the vehicle speed lowers, the target rear wheel turning angle ratio $TG\theta_S$ cannot be sharply changed from the same phase to the reverse phase, whereby occurrence of an oversteering state can be prevented.

Further when the steering wheel is further turned in the same direction while the vehicle is making a sharp deceleration during turning, or when the vehicle begins to spin, the target rear wheel turning angle ratio $TG\theta_S$ changes toward the same phase in response to increase in the yaw rate $\psi'$ or the yaw-rate-based correction value $\theta_{S \cdot YAW}$, whereby unstable behavior of the vehicle can be prevented. Especially in the embodiment described above, since the control gains f4(V) and f2(V) are fixed to the value 1.2 times the value of these control gains at the time of determination that the vehicle is making a sharp deceleration during turning, that is, the value of these control gains at the time of determination that the vehicle is making a sharp deceleration during turning is corrected toward the same phase, turning of the rear wheels is further corrected toward the same phase and accordingly, unstable behavior of the vehicle can be better prevented.

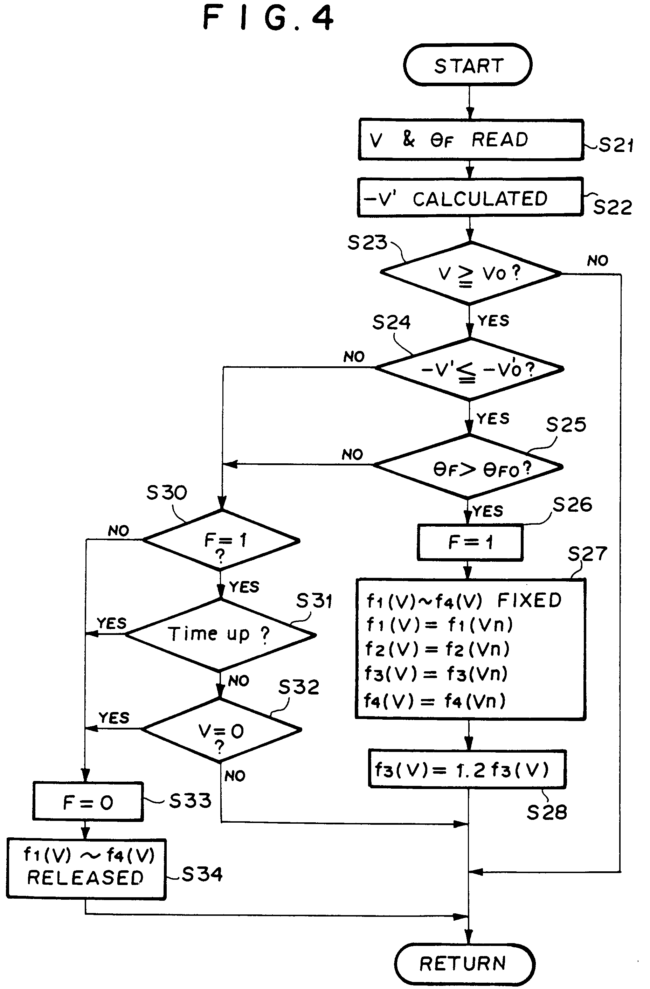

Figure 4 shows a modification of the flow chart shown in Figure 3 for correcting the target rear wheel turning angle ratio $TG\theta_S$.

In this modification, the vehicle speed V and the front wheel turning angle $\theta_F$ are first read (step S21) and then the deceleration of the vehicle -V' is calculated (step S22) as in the embodiment described above. Then in step S23, it is determined whether the vehicle speed V is not lower than a predetermined value Vo, and in step S24, it is determined whether the deceleration of the vehicle -V' is not smaller than a predetermined value -V'o (-V'≤-V'o), and in step S25, it is determined whether the front wheel turning angle $\theta_F$ is larger than a predetermined value $\theta_{Fo}$. When the answers to the questions in these steps are all YES, flag F is set to 1 in step S26 and then in step S27, the vehicle speed sensitive control gains f1(V) to f4(V) of the formula (1) are fixed respectively to the values at that time f1(Vn) to f4(Vn). The fixed control gain f3(V) of the third term (front-wheel-turning-speed-based correction term) is then replaced with the values obtained by multiplying it by 1.2. (step S28) Then the flow returns.

When the answer to the question in step S23 is NO, the flow directly returns. When the answer to the question in step S24 or S25, is NO, it is determined in step S30 whether the flag F is 1. When it is determined that the flag F is 1, it is then determined in step S31 whether time is up and it is determined in step S32 whether the vehicle speed is 0. When the answers to the questions in steps S31 and S32 are both NO, the flow immediately returns.

When the answer to the question in step S30 is NO, or when the answer to the question in step S31 or S32 is NO, the flag F is reset to 0 in step S33 and the fixed control gains f1(V) to f4(V) are released in step S34.

That is, when it is determined that the vehicle is making a sharp deceleration during turning in steps S21 to S25, the target rear wheel turning angle ratio $TG\theta_S$ is corrected on the basis of the fixed control gains f1(V) to f4(V) in steps S26 to S28 and S30 to S34.

In this modification, as in the embodiment described above, by fixing the control gain f4(V) of the base term and the control gain f2(V) of the yaw-rate-based correction term to predetermined values when the vehicle makes a sharp deceleration during turning, the target rear wheel turning angle ratio $TG\theta_S$ cannot be sharply changed from the same phase to the reverse phase, whereby occurrence of an oversteering state can be prevented and unstable behavior of the vehicle can be prevented. .

Further since the control gains f1(V) and f3(V) of the front-wheel-turning-angle-based correction term and the front-wheel-turning-speed-based correction term are fixed in addition to the control gains f4(V) and f2(V), the target rear wheel turning angle ratio $TG\theta_S$ changes toward the reverse phase in response to increase in the front wheel turning angle and the front wheel turning speed when the steering wheel is turned in the reverse direction while the vehicle is making a sharp deceleration during turning, whereby the heading performance of the vehicle can be improved. Especially in the modification described above, since the control gain f3(V) of the front-wheel-turning-speed-based correction term is fixed to the value 1.2 times the value of the control gain at the time of determination that the vehicle is making a sharp deceleration during turning, that is, the value of the control gain at the time of determination that the vehicle is making a sharp deceleration during turning is corrected toward the reverse phase, turning of the rear wheels is further corrected toward the reverse phase and accordingly, the heading performance of the vehicle can be better improved.

Though, in the embodiment and the modification described above, the control gains are fixed when the vehicle is making a sharp deceleration during turning, it is preferred that the control gains be fixed when the vehicle is making a sharp deceleration irrespective of whether the vehicle is making a turn so that the target value is corrected both when the vehicle begins to make a sharp deceleration during turning and when the vehicle begins turning while the vehicle is making a sharp deceleration.

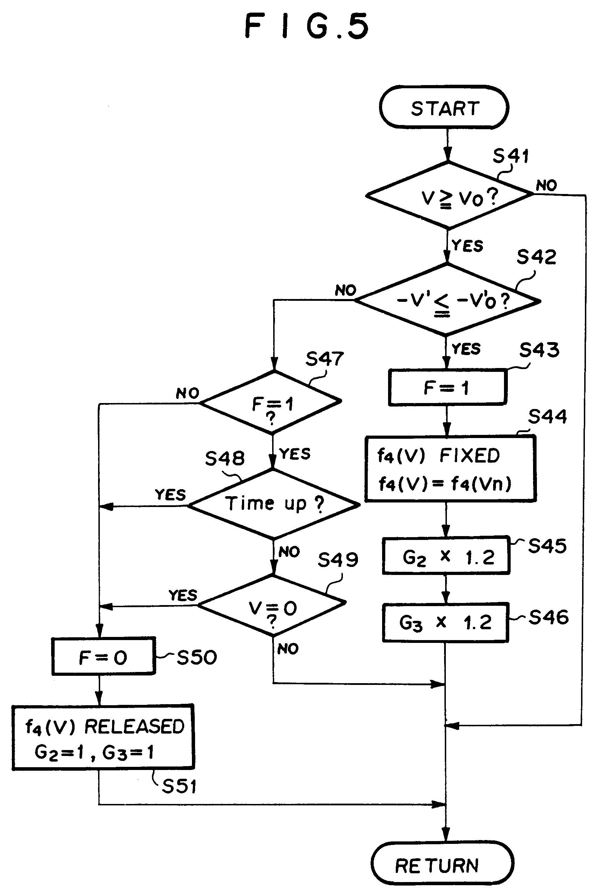

Figure 5 shows another modification of the flow chart shown in Figure 3 for correcting the target rear wheel turning angle ratio $TG\theta_S$.

When the vehicle speed V is not lower than a predetermined value Vo (e.g., 50 to 60Km/h) (step S41), it is determined in step S42 whether the deceleration of the vehicle -V' is not smaller than a predetermined value -V'o (-V'≤-V'o). When it is determined that the deceleration of the vehicle -V' is not smaller than the predetermined value -V'o (-V'≤-V'o), that is, when it is determined that the vehicle is making a sharp deceleration, flag F is set to 1 in step S42. Then in step S44, the vehicle speed sensitive control gain f4(V) of the fourth term (the base term) of the formula (1) is fixed to the value at that time f4(Vn). Then the constants G2 and G3 of the yaw-rate-based correction term and the front-wheel-turning-speed-based correction term are increased to 1.2 times the normal values. (steps S45 and S46)

When it is determined that the deceleration of the vehicle -V' is smaller than the predetermined value -V'o (-V'≤-V'o) in step S42, it is determined in step S47 whether the flag F is 1. When it is determined that the flag F is 1, it is then determined in step S41 whether time is up and it is determined in step S49 whether the vehicle speed is 0. When it is determined in step S48 that time is not up and at the same time it is determined in step S49 that the vehicle speed is not 0, the flow immediately returns.

When it is determined in step S47 that the flag F is not 1, when it is determined in step S48 that time is up or when it is determined in step S49 that the vehicle speed is 0, the flag F is reset to 0 in step S50 and the fixed control gain f4(V) is released and the constants G2 and G3 are returned to the normal values. (step S51)

When the vehicle makes a sharp deceleration, for instance, by application of the brake during a high speed travel, the vehicle speed signal representing the vehicle speed as detected by the vehicle speed sensor can become very small relative to the actual vehicle speed due to lock of the wheels or the like. If the vehicle speed signal as it is is used in calculation of the control gains f1(V) to f4(V), the control gain f4(V) of the base term greatly changes toward the negative and accordingly, the base term greatly changes toward the negative, whereby turning of the rear wheels are controlled giving weight to the heading performance rather than the directional stability of the vehicle in spite of a high actual vehicle speed, which can result in unstable behavior of the vehicle.

In this modification, since the vehicle speed sensitive control gain f4(V) is fixed and the base term is fixed when the vehicle makes a sharp deceleration, use of an abnormal value in determination of the target rear wheel turning angle ratio $TG\theta_S$ can be prevented, whereby the directional stability of the vehicle can be ensured.

The yaw-rate-based correction term is a parameter which is added in calculation of the target rear wheel turning angle ratio $TG\theta_S$ and is used in order to improve the directional stability of the vehicle and on the other hand, the front-wheel-turning-angle-based correction term and the front-wheel-turning-speed-based correction term are parameters which are subtracted in calculation of the target rear wheel turning angle ratio $TG\theta_S$ and are used in order to improve the heading performance of the vehicle.

Since the front wheel turning angle signal and the front wheel turning speed signal are feedforward type signals as well as the vehicle speed signal and accordingly are immediately reflected to determination of the target rear wheel turning angle ratio $TG\theta_S$. On the other hand, the yaw rate signal is a feedback type signal and is reflected to determination of the target rear wheel turning angle ratio $TG\theta_S$ with a certain delay. Accordingly, the front wheel turning angle $\theta_F$ and the front wheel turning speed $\theta'_{F2}$ contribute to determination of the value of the target rear wheel turning angle ratio $TG\theta_S$ more than the yaw rate $\psi'$ immediately after beginning of the sharp deceleration and then the yaw rate $\psi'$ comes to largely contribute to determination of the same. Thus the heading performance can be improved immediately after beginning of the sharp deceleration and thereafter the directional stability of the vehicle can be improved. For example, in the case where the steering wheel is quickly turned simultaneously with a sudden application of the brake as in the case where a walker rushes out in front of the vehicle, the walker can be easily cleared due to the improvement in the heading performance immediately after beginning of the sharp deceleration and the stability of the vehicle thereafter can be ensured.

Since, in this particular modification, the constant G3 of the front-wheel-turning-speed-based correction term which quickly responses to a sharp turning of the steering wheel is increased to 1.2 times, the heading performance immediately after beginning of the sharp deceleration is further improved. Further also the constant G2 of the yaw-rate-based correction term is increased to 1.2 times, the directional stability of the vehicle is better improved.

Correction of the target rear wheel turning angle ratio $TG\theta_S$ is continued until a predetermined time lapses or the vehicle speed falls to 0 in preparation for the next sharp deceleration of the vehicle. (steps S47 to S51)

Though, in the above modification, the control gain f4(V) of the base term is fixed to the value at that time f4(Vn), it may be fixed to a value somewhat smaller than the value at that time f4(Vn) (e.g., f4(Vn)-0.03).

## Claims

1. A four-wheel steering system for a vehicle comprising a target value determining means (31) which determines a target value ($TG\Theta_{S1}$) for controlling turning of the rear wheels (3, 4) in response to turning of the front wheels (1,2) by adding and subtracting a plurality of correction terms which are determined as a product of a function of running state values ($\Theta_F$, $\Psi'$, $\Theta'_{F2}$) other than the vehicle speed (V) and a corresponding control gain ($f_1(V)$, $f_2(V)$, $f_3(V)$) determined according to the vehicle speed (V) to and from a base term ($G_4 \times f_4(V)$) which is determined according to the vehicle speed (V), the base term ($G_4 \times f_4(V)$) being set according to the vehicle speed (V) so that the rear wheels (3, 4) are turned in the reverse phase in a low vehicle speed range and in the same phase in a high vehicle speed range, said system further having

a determining means which determines that the vehicle is making a sharp deceleration, and

a correction means (15) which causes the target value

determining means (31) to fix the base term ($G_4 \times f_4(V)$) and the control gains ($f_2(V)$; $f_2(V)$, $f_3(V)$, $f_4(V)$) of at least one of the correction terms to respective predetermined values and to determine the target value ($TG\Theta_{S1}$) on the basis of the base term ($G_4 \times f_4(V)$) and the correction terms thus obtained when the determining means determines that the vehicle is making a sharp deceleration.

2. A four-wheel steering system as defined in claim 1 in which said correction terms which are determined on the basis of running state values ($\Theta_F$, $\Psi'$, $\Theta'_{F2}$) other than the vehicle speed (V) includes a yaw-rate-based correction term, a front-wheel-turning-angle-based correction term and a front-wheel-turning-speed-based correction term respectively having the yaw rate ($\Psi'$), the front wheel turning angle ($\Theta_F$) and the front wheel turning speed ($\Theta'_{F2}$) as the running state values, the control gain ($f_2(V)$) of the yaw-rate-based correction term is set to be 0 in a low vehicle speed range, to be a positive constant value in a middle vehicle speed range and to be a positive constant value in a high vehicle speed range, the control gain ($f_1(V)$) of the front-wheel-turning-angle-based correction term is set to be a positive constant value in the low vehicle speed range, to be 0 in the middle vehicle speed range and to be a positive constant value in the high vehicle speed range, and the control gain ($f_3(V)$) of the front-wheel-turning-speed-based correction term is set to be a positive constant value in the low vehicle speed range, to be 0 in the middle vehicle speed range and to be a positive constant value in the high vehicle speed range.

3. A four-wheel steering system as defined in claim 2 in which said correction means (15) causes the target value determining means (31) to fix the base term ($G_4 \times f_4(V)$) and the control gain ($f_2(V)$) of the yaw-rate-based correction term to respective predetermined values and to determine the target value ($TG\Theta_{S1}$) on the basis of the base term and the correction term thus obtained when the determining means (15) determines that the vehicle is making a sharp deceleration.

4. A four-wheel steering system as defined in claim 3 in which the base term and the control gain of the yaw-rate-based correction term are fixed to values ($G_4 \times f_4(V_n)$ and $f_2(V_n)$) equal to those at the time (n) of determination that the vehicle is making a sharp deceleration.

5. A four-wheel steering system as defined in claim 3 in which the base term and the control gain of the yaw-rate-based correction term are fixed to values obtained by correcting the values of the base term and the control gain of the yaw-rate-based correction term at the time of determination that the vehicle is making a sharp deceleration towards the positive phase side.

6. A four-wheel steering system as defined in claim 2 in which said correction means (15) causes the target value determining means (31) to fix the base term ($G_4 \times f_4(V)$) and the control gains ($f_1(V)$, $f_2(V)$, $f_3(V)$) of the yaw-rate-based correction term, the front-wheel-turning-angle-based correction term and the front-wheel-turning-speed-based correction term to respective predetermined values and to determine the target value ($TG\Theta_{S1}$) on the basis of the base term and the correction terms thus obtained when the determining means (15) determines that the vehicle is making a sharp deceleration.

7. A four-wheel steering system as defined in claim 6 in which the base term and the control gains of the correction terms are fixed to values ($G_4 \times f_4(V_n)$, $f_1(V_n)$, $f_2(V_n)$, $f_3(V_n)$) at the time of determination that the vehicle is making a sharp deceleration.

8. A four-wheel steering system as defined in claim 6 in which the base term and the control gains of the correction terms are fixed to values obtained by correcting the values of the base term and the control gains of the correction terms at the time of determination that the vehicle is making a sharp deceleration towards the negative phase side.

9. A four-wheel steering system for a vehicle comprising a target value determining means (31) which determines a target value ($TG\Theta_{S1}$) for controlling turning of the rear wheels (3, 4) in response to turning of the front wheels (1, 2) by addition and subtraction of a plurality of terms obtained on the basis of a feedback type detecting signal ($\Psi'$) and a feedforward type detecting signal (V, $\Theta_F$, $\Theta'_{F2}$) including a vehicle speed signal (V) wherein said target value determining means (31) uses a predetermined fixed value in place of one of the terms obtained according to at least the vehicle speed signal (V) among the feedforward type detecting signal (V, $\Theta_F$, $\Theta'_{F2}$) and determines the target value ($TG\Theta_S$) on the basis of the terms thus obtained when a determining means (15) determines that the vehicle is making a sharp deceleration.

10. A four-wheel steering system as defined in claim 9 in which said feedback type detecting signal includes a yaw rate signal ($\Psi'$) and the feedforward type detecting signal includes a vehicle speed signal (V) and a front wheel turning

angle signal ($\Theta_F$), the target value determining means (31) using a fixed value only in place of the term obtained on the basis of the vehicle speed signal (V).

**11.** A four-wheel steering system as defined in claim 9 in which said feedback type detecting signal includes a yaw rate signal ($\Psi'$) and the feedforward type detecting signal includes a vehicle speed signal (V), a front wheel turning angle signal ($\Theta_F$) and a front wheel turning speed signal ($\Theta'_{F2}$), the target value determining means (31) using a fixed value only in place of the term obtained on the basis of the vehicle speed signal (V).

**12.** A four-wheel steering system as defined in claim 11 further comprising a correction means (15) which increases the term obtained on the basis of the front wheel turning speed signal ($\Theta'_{F2}$) when the determining means (15) determines that the vehicle is making a sharp deceleration.

**13.** A four-wheel steering system as defined in claim 9 further comprising a correction means (15) which increases the term obtained on the basis of the feedback type detecting signal ($\Psi'$) when the determining means (15) determines that the vehicle is making a sharp deceleration.

**14.** A four-wheel steering system as defined in claim 9 in which said fixed value is equal to the value of the term at the time of determination that the vehicle is making a sharp deceleration.

**15.** A four-wheel steering system as defined in claim 9 in which said fixed value is equal to the value obtained by correcting the value of the term at the time of determination that the vehicle is making a sharp deceleration towards the negative phase side.

**16.** A four-wheel steering system for a vehicle as defined in any of claims 1 to 8 in which
said determining means (15) determines that the vehicle is making a sharp deceleration simultaneously with a turn, and
said correction means (15) causes the target value determining means (31) to fix the base term and the control gains of at least one of the correction terms to respective predetermined values and to determine the target value ($TG\Theta_{S1}$) on the basis of the base term and the correction terms thus obtained when the determining means determines that the vehicle is making a sharp deceleration simultaneously with a turn.

**Patentansprüche**

**1.** Vierradlenksystem für ein Fahrzeug, umfassend eine Zielwertbestimmungseinrichtung (31), welche einen Zielwert ($TG\theta_{S1}$) bestimmt, zum Steuern des Einschlagens der Heckräder (3, 4), ansprechend auf ein Einschlagen der Fronträder (1, 2) durch Addieren und Subtrahieren einer Mehrzahl von Korrekturwerten, welche bestimmt sind als ein Produkt einer Funktion eines anderen Laufzustandswertes ($\theta_F$, $\psi'$, $\theta'_{F2}$) als der Fahrzeuggeschwindigkeit (V), sowie eine entsprechende Steuerverstärkung ($f_1(V)$, $f_2(V)$, $f_3(V)$) bestimmt entsprechend der Fahrzeuggeschwindigkeit (V) zu und von einem Basiswert ($G_4 \times f_4(V)$), welcher bestimmt ist entsprechend der Fahrzeuggeschwindigkeit (V), wobei der Basiswert ($G_4 \times f_4(V)$) eingestellt ist entsprechend der Fahrzeuggeschwindigkeit (V), so daß die Heckräder (3, 4) in einem niedrigen Fahrzeuggeschwindigkeitsbereich gegenphasig eingeschlagen werden, und in der gleichen Phase in einem hohen Fahrzeuggeschwindigkeitsbereich, wobei das System des weiteren aufweist

eine Bestimmungseinrichtung, welche bestimmt, daß das Fahrzeug stark verzögert, und
eine Korrektureinrichtung (15), welche die Zielwertbestimmungseinrichtung (31) veranlaßt, den Basiswert ($G_4 \times f_4(V)$) und die Steuerverstärkungen ($f_1(V)$, $f_2(V)$, $f_3(V)$, $f_4(V)$) von zumindest einem der Korrekturwerte auf jeweilige vorbestimmte Werte festzulegen, und den Zielwert ($TG\theta_{S1}$) auf der Basis der so erhaltenen Basis ($G_4 \times f_4(V)$) und Korrekturwerte zu bestimmen, wenn die Bestimmungseinrichtung bestimmt, daß das Fahrzeug stark verzögert.

**2.** Vierradlenksystem nach Anspruch 1, bei welchem die Korrekturwerte, welche bestimmt sind auf der Basis von anderen Laufzustandswerten ($\theta_F$, $\psi'$, $\theta'_{F2}$) als der Fahrzeuggeschwindigkeit (V), umfassen einen gierratenbasierten Korrekturwert, einen frontradeinschlagwinkelbasierten Korrekturwert bzw. einen frontradeinschlaggeschwindigkeitsbasierten Korrekturwert mit der Gierrate ($\psi'$), dem Frontradeinschlagwinkel ($\theta_F$) und der Frontradeinschlaggeschwindigkeit ($\theta'_{F2}$) als die Laufzustandswerte, wobei die Steuerverstärkung ($f_2(V)$) des gierratenbasierten Korrekturwertes auf 0 eingestellt ist in einem niedrigen Fahrzeuggeschwindigkeitsbereich, auf einen positiven konstanten Wert in einem mittleren Fahrzeuggeschwindigkeitsbereich, und auf einen positiven konstanten Wert in einem hohen Fahrzeuggeschwindigkeitsbereich, wobei die Steuerverstärkung ($f_1(V)$) des frontradeinschlagwinkelbasierten Korrekturwertes eingestellt ist auf einen positiven konstanten Wert in dem niedrigen Fahrzeuggeschwindigkeitsbereich, auf 0 in dem mittleren Fahrzeuggeschwindigkeitsbereich und auf einen positiven konstanten Wert in dem hohen Fahrzeuggeschwindigkeitsbereich, und wobei die Steuerverstärkung ($f_3(V)$) des frontradeinschlaggeschwindigkeitsbasierten Korrekturwertes eingestellt ist auf einen positiven konstanten Wert in dem niedrigen Fahrzeuggeschwindigkeitsbereich, auf 0 in dem mittleren Fahrzeuggeschwindigkeitsbereich und auf einen positiven konstanten Wert in dem hohen Fahrzeuggeschwindigkeitsbereich.

3. Vierradlenksystem nach Anspruch 2, bei welchem die Korrektureinrichtung (15) die Zielwertbestimmungseinrichtung (31) veranlaßt, den Basiswert ($G_4$ x $f_4(V)$) und die Steuerverstärkung ($f_2(V)$) des gierratenbasierten Korrekturwertes festzulegen auf jeweilige vorbestimmte Werte, und den Zielwert ($TG\theta_{S1}$) auf der Basis der so erhaltenen Basis- und Korrekturwerte zu bestimmen, wenn die Bestimmungseinrichtung (15) bestimmt, daß das Fahrzeug stark verzögert.

4. Vierradlenksystem nach Anspruch 3, bei welchem der Basiswert und die Steuerverstärkung des gierratenbasierten Korrekturwertes festgelegt sind auf Werte ($G_4$ x $f_4(V_n)$) und ($f_2(V_n)$) gleich jenen zu der Zeit (n) der Bestimmung, daß das Fahrzeug stark verzögert.

5. Vierradlenksystem nach Anspruch 3, bei welchem der Basiswert und die Steuerverstärkung des gierratenbasierten Korrekturwertes festgelegt sind auf Werte, erhalten durch Korrigieren der Werte des Basiswertes und der Steuerverstärkung des gierratenbasierten Korrekturwertes zu der Zeit der Bestimmung, daß das Fahrzeug stark verzögert, hin zu der positiven Phasenseite.

6. Vierradlenksystem nach Anspruch 2, bei welchem die Korrektureinrichtung (15) die Zielwertbestimmungseinrichtung (31) veranlaßt, den Basiswert ($G_4$ x $f_4(V)$) und die Steuerverstärkungen ($f_1(V)$, $f_2(V)$, $f_3(V)$) des gierratenbasierten Korrekturwertes, des frontradeinschlagwinkelbasierten Korrekturwertes und des frontradeinschlaggeschwindigkeitsbasierten Korrekturwertes auf jeweilige vorbestimmte Werte festzulegen, und den Zielwert ($TG\theta_{S1}$) auf der Basis der so erhaltenen Basis- und Korrekturwerte zu bestimmen, wenn die Bestimmungseinrichtung (15) bestimmt, daß das Fahrzeug stark verzögert.

7. Vierradlenksystem nach Anspruch 6, bei welchem der Basiswert und die Steuerverstärkungen der Korrekturwerte festgelegt sind auf Werte ($G_4$ x $f_4(V_n)$, $f_1(V_n)$, $f_2(V_n)$, $f_3(V_n)$) zu der Zeit der Bestimmung, daß das Fahrzeug stark verzögert wird.

8. Vierradlenksystem nach Anspruch 6, bei welchem der Basiswert und die Steuerverstärkungen der Korrekturwerte festgelegt sind auf Werte, erhalten durch Korrigieren der Werte des Basiswertes und der Steuerverstärkungen der Korrekturwerte zu der Zeit der Bestimmung, daß das Fahrzeug stark verzögert, und zwar hin zu der negativen Phasenseite.

9. Vierradlenksystem für ein Fahrzeug, umfassend eine Zielwertbestimmungseinrichtung (31), welche einen Zielwert ($TG\theta_{S1}$) bestimmt, zum Steuern des Einschlagens der Heckräder (3, 4), ansprechend auf ein Einschlagen der Fronträder (1, 2), durch Addieren und Subtrahieren einer Mehrzahl von Werten, erhalten auf der Basis eines Rückkopplungstyperfassungssignales ($\psi'$) und eines Direktkopplungstyperfassungssignales (V, $\theta_F$, $\theta'_{F2}$), umfassend ein Fahrzeuggeschwindigkeitssignal (V), wobei die Zielwertbestimmungseinrichtung (31) einen vorbestimmten festgelegten Wert anstelle von einem der Werte verwendet, erhalten entsprechend zumindest dem Fahrzeuggeschwindigkeitssignal (V), unter den Direktkopplungstyperfassungssignalen (V, $\theta_F$, $\theta'_{F2}$), und den Zielwert ($TG\theta_S$) bestimmt auf der Basis von so erhaltenen Werten, wenn eine Bestimmungseinrichtung (15) bestimmt, daß das Fahrzeug stark verzögert.

10. Vierradlenksystem nach Anspruch 9, bei welchem das Rückkopplungstyperfassungssignal ein Gierratensignal ($\psi'$) umfaßt, und bei welchem das Direktkopplungstyperfassungssignal ein Fahrzeuggeschwindigkeitssignal (V) und ein Frontradeinschlagwinkelsignal ($\theta_F$) umfaßt, wobei die Zielwertbestimmungseinrichtung (31) einen festgelegten Wert lediglich anstelle des Wertes verwendet, erhalten auf der Basis des Fahrzeuggeschwindigkeitssignales (V).

11. Vierradlenksystem nach Anspruch 9, bei welchem das Rückkopplungstyperfassungssignal ein Gierratensignal ($\psi'$) umfaßt, und das Direktkopplungstyperfassungssignal ein Fahrzeuggeschwindigkeitssignal (V), ein Frontradeinschlagwinkelsignal ($\theta_F$) und ein Frontradeinschlaggeschwindigkeitssignal ($\theta_{F2}$) umfaßt, wobei die Zielwertbestimmungseinrichtung (31) einen festgelegten Wert lediglich anstelle des Wertes verwendet, erhalten auf der Basis des Fahrzeuggeschwindigkeitssignales (V).

12. Vierradlenksystem nach Anspruch 11, des weiteren umfassend eine Korrektureinrichtung (15), welche den Wert erhöht, erhalten auf der Basis des Frontradeinschlaggeschwindigkeitssignales ($\theta_{F2}$), wenn die Bestimmungseinrichtung (15) bestimmt, daß das Fahrzeug stark verzögert.

13. Vierradlenksystem nach Anspruch 9, des weiteren umfassend eine Korrektureinrichtung (15), welche den Wert erhöht, erhalten auf der Basis des Rückkopplungstyperfassungssignales ($\psi'$), wenn die Bestimmungseinrichtung (15) bestimmt, daß das Fahrzeug stark verzögert.

14. Vierradlenksystem nach Anspruch 9, bei welchem der festgelegte Wert gleich ist dem Wert des Wertes zu der Zeit der Bestimmung, daß das Fahrzeug stark verzögert.

15. Vierradlenksystem nach Anspruch 9, bei welchem der festgelegte Wert gleich dem Wert ist, erhalten durch Korrigieren des Wertes des Wertes zur Zeit der Bestimmung, daß das Fahrzeug stark verzögert, und zwar hin zu der negativen Phasenseite.

16. Vierradlenksystem für ein Fahrzeug nach einem der Ansprüche 1 bis 8, bei welchem die Bestimmungseinrichtung (15) bestimmt, daß das Fahrzeug stark verzögert, gleichzeitig zu einer Drehung, und die Korrektureinrichtung (15) die Zielwertbestimmungseinrichtung (31) veranlaßt, den Basiswert und die Steuerverstärkungen von zumindest einem der Korrekturwerte festzulegen auf jeweilige vorbestimmte Werte, und den Zielwert ($TG\theta_{S1}$) auf der Basis der so erhaltenen Basis- und Korrekturwerte zu bestimmen, wenn die Bestimmungseinrichtung bestimmt, daß das Fahrzeug stark verzögert, gleichzeitig zu einer Drehung.

**Revendications**

1. Un système à quatre roues directrices pour un véhicule comprenant des moyens de détermination de valeur de consigne (31), qui déterminent une valeur de consigne ($TG\Theta_{S1}$) afin de commander le braquage des roues arrière (3, 4), en réponse au braquage des roues avant (1, 2), en ajoutant et soustrayant une pluralité de termes de correction, qui sont déterminés par un produit d'une fonction de valeurs d'état de fonctionnement ($\Theta_{F'}$, $\Psi'$, $\Theta'_{F2}$), autres que la vitesse du véhicule (V), et d'un gain de commande ($f_1(V)$, $f_2(V)$, $f_3(V)$) correspondant déterminé en fonction de la vitesse du véhicule (V), à destination et à partir d'un terme de base ($G_4 \times f_4(V)$) qui est déterminé en fonction de la vitesse du véhicule (V), le terme de base ($G_4 \times f_4(V)$) étant fixé en fonction de la vitesse du véhicule (V), de manière que les roues arrière (3, 4) soient braquées à contre-phase, pour une plage de vitesses de véhicule faibles, et selon la même phase, pour une plage de vitesses de véhicule élevées, ledit système comportant en outre

des moyens de détermination, qui déterminent que le véhicule se trouve en décélération prononcée, et
des moyens de correction (15) qui obligent les moyens de détermination (31) de la valeur de consigne à fixer le terme de base ($G_4 \times f_4(V)$) et les gains de commande ($f_2(V)$; $f_2(V)$, $f_3(V)$, $f_4(V)$) d'au moins l'un des termes de correction à des valeurs prédéterminées respectives, et à déterminer la valeur de consigne ($TG\Theta_{S1}$) sur la base du terme de base ($G_4 \times f_4(V)$), et les termes de correction ainsi obtenus, lorsque les moyens de détermination déterminent que le véhicule se trouve en décélération prononcée.

2. Un système à quatre roues directrices selon la revendication 1, dans lequel lesdits termes de correction qui sont déterminés sur la base de valeurs d'état de fonctionnement ($\Theta_{F'}$, $\Psi'$, $\Theta'_{F2}$), autres que la vitesse du véhicule (V), comprennent un terme de correction basé sur le taux de lacet, un terme de correction basé sur l'angle de braquage des roues avant et un terme de correction basé sur la vitesse de braquage des roues avant, ayant respectivement le taux de lacet ($\Psi'$), l'angle de braquage des roues avant ($\Theta_F$) et la vitesse de braquage des roues avant ($\Theta'_{F2}$), en tant que valeurs d'état de fonctionnement, le gain de commande ($f_2(V)$) du terme de correction basé sur le taux de lacet est fixé à la valeur 0 pour une plage de vitesses de véhicule peu élevées, à une valeur constante positive pour une plage de vitesses de véhicule moyennes, et à une valeur constante positive pour une plage de vitesses de véhicule élevées, le gain de commande ($f_1(V)$) du terme de correction basé sur l'angle de braquage des roues avant est fixé à une valeur constante positive pour une plage de vitesses de véhicule peu élevées, à la valeur 0 pour une plage de vitesses de véhicule moyennes, et à une valeur constante positive pour une plage de vitesses de véhicule élevées, et le gain de commande ($f_3(V)$) du terme de correction basé sur la vitesse de braquage des roues avant est fixé à une valeur constante positive pour une plage de vitesses de véhicule peu élevées, à la valeur 0 pour une plage de vitesses de véhicule moyennes, et à une valeur constante positive pour une plage de vitesses de véhicule élevées.

3. Un système à quatre roues directrices selon la revendication 2, dans lequel lesdits moyens de correction (15) provoquent l'établissement, par les moyens de détermination de valeur de consigne (31), du terme de base ($G_4 \times f_4(V)$) et du gain de commande ($f_2(V)$) du terme de correction basé sur le taux de lacet, respectivement, à des valeurs prédéterminées, et la détermination de la valeur de consigne $(TG\Theta_{S1})$ sur la base du terme de base et du terme de correction ainsi obtenu, lorsque les moyens de détermination (15) déterminent que le véhicule se trouve en décélération prononcée.

4. Un système à quatre roues directrices selon la revendication 3, dans lequel le terme de base et le gain de commande du terme de correction basé sur le taux de lacet sont fixés à des valeurs $(G_4 \times f_4(V_n))$ et $(f_2(V_n))$ égales à celles à l'instant (n) lors de la détermination de l'état de décélération prononcée pour le véhicule.

5. Un système à quatre roues directrices selon la revendication 3, dans lequel le terme de base et le gain de commande du terme de correction basé sur le faux de lacet sont fixés à des valeurs obtenues par correction des valeurs du terme de base et du gain de commande du terme de correction basé sur le taux de lacet, à l'instant de la détermination de l'état de décélération prononcée pour le véhicule vers le côté à phase positive.

6. Un système à quatre roues directrices selon la revendication 2, dans lequel lesdits moyens de correction (15) provoquent l'établissement, par les moyens de détermination de valeur de consigne (31), du terme de base $(G_4 \times f_4(V))$ et des gains de commande $(f_1(V), f_2(V), f_3(V))$ du terme de correction basé sur le faux de lacet, du terme de correction basé sur l'angle de braquage des roues avant et du terme de correction basé sur la vitesse de braquage des roues avant, à des valeurs prédéterminées respectives, et la détermination de la valeur de consigne $(TG\Theta_{S1})$ sur la base du terme de base et des termes de correction ainsi obtenus, lorsque les moyens de détermination (15) déterminent que le véhicule se trouve en décélération prononcée.

7. Un système à quatre roues directrices selon la revendication 6, dans lequel le terme de base et les gains de commande des termes de correction sont fixés à des valeurs $((G_4 \times f_4(V_n), f_1(V_n), f_2(V_n), f_3(V_n))$ à l'instant de la détermination de l'état de décélération prononcée pour le véhicule.

8. Un système à quatre roues directrices selon la revendication 6, dans lequel le terme de base et les gains de commande des termes de correction sont fixés à des valeurs obtenues par correction des valeurs du terme de base et des gains de commande des termes de correction à l'instant de la détermination de l'état de décélération prononcée pour le véhicule vers le côté à phase négative.

9. Un système à quatre roues directrices pour un véhicule comprenant des moyens de détermination de valeur de consigne (31), qui déterminent une valeur de consigne $(TG\Theta_{S1})$ afin de commander le braquage des roues arrière (3, 4), en réponse au braquage des roues avant (1, 2), en ajoutant et soustrayant une pluralité de termes obtenus sur la base d'un signal de détection du type à rétroaction $(\Psi')$ et d'un signal de détection du type à action directe $(V, \Theta_F, \Theta'_{F2})$ comprenant un signal de vitesse de véhicule (V), dans lequel lesdits moyens de détermination de valeur de consigne (31) utilisent une valeur fixe prédéterminée à la place d'un des termes obtenus en fonction d'au moins le signal de vitesse de véhicule (V) dans le signal de détection du type à action directe $(V, \Theta_F, \Theta'_{F2})$ et déterminent la valeur de consigne $(TG\Theta_S)$ sur la base des termes ainsi obtenus lorsque les moyens de détermination (15) déterminent que le véhicule se trouve en décélération prononcée.

10. Un système à quatre roues directrices selon la revendication 9, dans lequel ledit signal de détection du type à rétroaction comprend un signal de taux de lacet $(\Psi')$ et le signal de détection du type à action directe comprend un signal de vitesse de véhicule (V) et un signal d'angle de braquage des roues avant $(\Theta_F)$, les moyens de détermination de valeur de consigne (31) utilisant une valeur fixe seulement à la place du terme obtenu sur la base du signal de vitesse de véhicule (V).

11. Un système à quatre roues directrices selon la revendication 9, dans lequel ledit signal de détection du type à rétroaction comprend un signal de taux de lacet $(\Psi')$ et le signal de détection du type à action directe comprend un signal de vitesse de véhicule (V), un signal d'angle de braquage des roues avant $(\Theta_F)$, et un signal de vitesse de braquage des roues avant $(\Theta'_{F2})$, les moyens de détermination de valeur de consigne (31) utilisant une valeur fixe seulement à la place du terme obtenu sur la base signal de vitesse du véhicule (V).

12. Un système à quatre roues directrices selon la revendication 11, comprenant en outre des moyens de correction (15), qui augmentent le terme obtenu sur la base du signal de vitesse de braquage des roues avant $(\Theta'_{F2})$, lorsque les moyens de détermination (15) déterminent que le véhicule se trouve en décélération prononcée.

13. Un système à quatre roues directrices selon la revendication 9, comprenant en outre des moyens de correction (15), qui augmentent le terme obtenu sur la base du signal de détection du type à rétroaction $(\Psi')$, lorsque les moyens de détermination (15) déterminent que le véhicule se trouve en décélération prononcée.

**14.** Un système à quatre roues directrices selon la revendication 9, dans lequel ladite valeur fixe est égale à la valeur du terme à l'instant de la détermination de l'état de décélération prononcée pour le véhicule.

**15.** Un système à quatre roues directrices selon la revendication 9, dans lequel ladite valeur fixe est égale à la valeur obtenue par correction de la valeur du terme à l'instant de la détermination de l'état de décélération prononcée pour le véhicule vers le côté à phase négative.

**16.** Un système à quatre roues directrices pour un véhicule selon l'une quelconque des revendications 1 à 8, dans lequel
lesdits moyens de détermination (15) déterminent que le véhicule se trouve en décélération prononcée, simultanément à la prise d'un virage, et
lesdits moyens de correction (15) provoquent l'établissement, par les moyens de détermination de valeur de consigne (31), du terme de base et des gains de commande d'au moins l'un des termes de correction, à des valeurs prédéterminées respectives, et la détermination de la valeur de consigne ($TG\Theta_{S1}$) sur la base du terme de base et des termes de correction ainsi obtenus, lorsque les moyens de détermination déterminent que le véhicule se trouve en décélération prononcée simultanément à la prise d'un virage.

# F I G . 1

$\theta_F$

$\theta_F$

FRONT WHEEL
TURNING
MECHANISM

11

1

2

V SENSOR — 21

$\psi'$ SENSOR — 22

$\theta_S$ SENSOR — 23

$\theta_F$ SENSOR — 24

10

12

$\theta_R$

$\theta_R$

$\theta_F$

CONTROL
UNIT

15

$\theta_S$ CHANGING
MECHANISM — 14

REAR WHEEL
TURNING
MECHANISM

3

4

13

# F I G. 2

# F I G.3

```
        ┌──────────┐
        │  START   │
        └──────────┘
             │
    ┌─────────────────────┐
    │  V & θF  READ       │─S1
    └─────────────────────┘
             │
    ┌─────────────────────┐
    │  -V'  CALCULATED    │─S2
    └─────────────────────┘
             │
           S3
        ◇ V ≥ V0 ? ◇──── NO
             │ YES
           S4
        ◇ -V' ≤ -V0' ? ◇  NO──┐
             │ YES            │
           S5                 │
        ◇ θF > θF0 ? ◇  NO────┤
             │ YES            │
           S6                 │
    ┌───────────┐             │
    │  F = 1    │             │
    └───────────┘             │
             │                │
           S7                 │
    ┌──────────────────────┐  │
    │ f4(V), f2(V)  FIXED  │  │
    │ f4(V) = f4(Vn)       │  │
    │ f2(V) = f2(Vn)       │  │
    └──────────────────────┘  │
             │                │
    ┌──────────────────────┐  │
    │ f4(V) = 1.2 x f4(V)  │─S8
    └──────────────────────┘  │
             │                │
    ┌──────────────────────┐  │
    │ f2(V) = 1.2 x f2(V)  │─S9
    └──────────────────────┘  │
```

S10   ◇ F = 1 ? ◇  NO

S11   ◇ Time up ? ◇  YES

S12   ◇ V = 0 ? ◇  YES    NO

S13   F = 0

S14   f2(V), f4(V) RELEASED

RETURN

# F I G . 4

```
                    START

              V & θF READ          S21

             -V' CALCULATED        S22

    S23
              V ≥ Vo ?      NO

                    YES
    S24
           -V' ≤ -Vo' ?    NO

                    YES      S25
                  θF > θFo?     NO

                    YES      S26
                   F = 1
                                   S27
              f1(V)~f4(V) FIXED
              f1(V) = f1(Vn)
              f2(V) = f2(Vn)
              f3(V) = f3(Vn)
              f4(V) = f4(Vn)

    S30
           F = 1 ?       NO

              YES    S31
           Time up ?       YES

              NO    S32
           V = 0 ?        YES

              NO
    F = 0   S33

    f1(V) ~ f4(V)
    RELEASED   S34

              f3(V) = 1.2 f3(V)
                                   S28

                    RETURN
```

$V$ & $\theta_F$ READ — S21

$-V'$ CALCULATED — S22

S23: $V \geqq V_o$ ? NO / YES

S24: $-V' \leqq -V_o'$ ? NO / YES

S25: $\theta_F > \theta_{Fo}$ ? NO / YES

S26: $F = 1$

S27: $f_1(V) \sim f_4(V)$ FIXED
$f_1(V) = f_1(V_n)$
$f_2(V) = f_2(V_n)$
$f_3(V) = f_3(V_n)$
$f_4(V) = f_4(V_n)$

S28: $f_3(V) = 1.2 f_3(V)$

S30: $F = 1$ ? NO / YES

S31: Time up ? YES / NO

S32: $V = 0$ ? YES / NO

S33: $F = 0$

S34: $f_1(V) \sim f_4(V)$ RELEASED

# F I G . 5

START

S41
$V \geqq V_0$ ? → NO

YES

S42
$-V' \leqq -V'_0$ ? → YES → S43 $F = 1$

NO

S47
$F = 1$ ? 

NO

YES

S48
Time up ? → YES

NO

S49
$V = 0$ ? → YES

NO

S50 $F = 0$

S44
$f_4(V)$ FIXED
$f_4(V) = f_4(Vn)$

S45 $G_2 \times 1.2$

S46 $G_3 \times 1.2$

S51
$f_4(V)$ RELEASED
$G_2 = 1, G_3 = 1$

RETURN